# EUROPÄISCHE PATENTSCHRIFT

(11) **EP 2 032 865 B1**
(45) Veröffentlichungstag und Bekanntmachung des Hinweises auf die Patenterteilung: **24.09.2014**
(21) Anmeldenummer: 07764360.9
(22) Anmeldetag: 12.06.2007
(51) Int. Cl.: F16C 11/06

(54) **GELENK- UND/ODER LAGERANORDNUNG**
JOINT AND/OR BEARING ARRANGEMENT
ENSEMBLE ARTICULATION ET/OU SUPPORT

(30) Priorität: 27.06.2006 DE 102006029778
(43) Veröffentlichungstag der Anmeldung: 11.03.2009
(73) Patentinhaber: ZF Friedrichshafen AG, 88038 Friedrichshafen (DE)
(72) Erfinder: BRUNNEKE, Hans-Gerd, 49124 Georgsmarienhütte (DE)
(86) Internationale Anmeldenummer: PCT/DE2007/001041
(87) Internationale Veröffentlichungsnummer: WO 2008/000219

(56) Entgegenhaltungen:
- EP-A1- 1 460 290
- WO-A-00/15967
- WO-A-2005/066510
- DE-A1- 4 445 251

## Beschreibung

Die Erfindung betrifft eine Gelenk- und/oder Lageranordnung nach dem Oberbegriff des Anspruchs 1 sowie ein Kraftfahrzeug mit einer oder mehreren derartigen Gelenkund/oder Lageranordnung(en), insbesondere in Fahrwerks- und/oder Lenkungsteilen.

Bei Gelenkanordnungen, die einen Zapfen aufweisen, der mit seinem Kopfbereich in einer Gelenkschale beweglich zu halten ist, muss diese Gelenkschale aus einem relativ weichen Material gebildet sein, um eine hinreichende Dämpfung und geräuscharmen Betrieb der Gelenk- oder Lageranordnung zu erreichen. Beispielsweise wird für eine Gelenkschale ein POM-Kunststoff verwendet. Dabei ergibt sich die Schwierigkeit, dass für die genannten Anforderungen der Gelenkschale geeignete Kunststoffe bei hoher Temperatur, zum Beispiel schon bei etwa 80 °C, und/oder Belastung häufig ihre Fließgrenze erreichen, wodurch es bei radialer Belastung zu einer plastischen und daher nicht reversiblen Verformung, etwa einer Verdünnung, der Gelenkschale kommen kann, was zu einem Spiel im Gelenk und einer verringerten Stabilität der Gelenkschale führt.

Aus der WO 2005/066510 A1 ist ein Kugelgelenk zur Aufnahme eines Kugelzapfens bekannt. Das Kugelgelenk weist eine Schale mit mindestens zwei Segmenten auf, wobei eines der Segmente aus einem ersten Werkstoff und ein weiteres aus einem zweiten Werkstoff gefertigt ist. Hierbei können unterschiedliche Werkstoffkombinationen zur Anwendung kommen.

Der Erfindung liegt das Problem zugrunde, insbesondere bei radial beanspruchten Gelenken. eine dauerhafte Verbesserung der Maßhaltigkeit und Stabilität der Gelenkschale zu erreichen.

Die Erfindung löst dieses Problem durch eine Gelenk- oder Lageranordnung mit den Merkmalen des Anspruchs 1 sowie durch ein Kraftfahrzeug mit den Merkmalen des Anspruchs 12. Hinsichtlich vorteilhafter Ausgestaltungen und Weiterbildungen der Erfindung wird auf die weiteren Ansprüche 3 bis 11 verwiesen.

Durch die Erfindung ist ein Fließen des Materials der Gelenk- oder Lagerschale durch mechanische Zwangsbedingung zuverlässig verhindert. Der bei radialer Belastung auftretende Druck durch den Kopfbereich des Zapfens auf die Umfangswandungen der Gelenk- oder Lagerschale kann aufgrund der axialen Barrieren im Idealfall nicht - in jedem Fall aber vermindert - zu einem Ausweichen des Wandungsmaterials in axialer Richtung führen. Die Wandungsstärke kann daher nicht abnehmen, eine Materialverdünnung ist verhindert.

Sofern die axialen Barrieren unmittelbar an der Gelenkschale in Verlängerung ihrer Umfangswandungen anliegen, ist diese mit ihren Umfangswandungen spielfrei in der Einfassung gehalten; deren axiale Fließbewegung ist vollständig unterbunden.

Insbesondere kann am Durchtrittsbereich des Zapfens die axiale Barriere als von der Innenwandung des Gehäuses einwärts ragender umlaufender Rand der Einfassung ausgebildet sein und zumindest 10% des Durchmessers des Gehäuses überdecken, also einen Bereich des Durchmessers, der größer ist als die eigentliche Stärke der umlaufenden Wandung des Gelenks. Damit ist ein Fließen des Gelenkschalenmaterials besonders zuverlässig unterbunden.

Günstig für die Stabilität und Herstellung der Einfassung bildet diese ein außerhalb eines Durchtrittsbereichs für den Gelenkzapfen zumindest im Wesentlichen geschlossenes Zwischengehäuse aus, das beispielsweise auch einstückig sein kann. Im der Durchtrittsöffnung gegenüber gelegenen Bereich kann das Zwischengehäuse wie eine Wanne vollständig geschlossen sein.

Das äußere Gehäuse muss kein gesondertes Gelenkbauteil bilden, sondern kann je nach Einsatzzweck auch als Umspritzung der Gelenkschale, etwa als Lenker eines Fahrwerks, gebildet sein. Die Gelenkanordnung kann dann trotzdem durch Herauspressen auswechselbar sein, um im Bedarfsfall auch bei Gelenkwechsel den Lenker weiter benutzen zu können.

Da bei der Montage von im Betrieb nur radial beanspruchten Gelenken dennoch ein axialer Weg für den Gelenkzapfen zur Verfügung stehen kann, ist das Vorsehen einer Verdrehsicherung im Gehäuse für die Einfassung besonders hilfreich. Diese kann beispielsweise durch einen in eine Schlitzausnehmung der Einfassung eingreifenden Bolzen gebildet sein.

Sehr günstig ist die Einfassung aus Stahl oder einem gegenüber der Gelenkschale härteren Kunststoff gebildet.

Eine Vorspannung der Gelenk- und/oder Lageranordnung sorgt für einen spiel- und klapperfreien Betrieb.

Die Erfindung ist insbesondere bei nur in der Einbauphase axial beanspruchten und im Betrieb nur radial beanspruchten Gelenkanordnungen einsetzbar.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine schematische, aufgeschnittene Übersichtszeichnung einer erfindungsgemäßen Gelenk- und/oder Lageranordnung mit einer einstückigen Einfassung und einer Verdrehsicherung für diese,
- Fig. 2: eine ähnliche Ansicht wie Figur 1 einer alternativen erfindungsgemäßen Gelenkanordnung mit einer im Wesentlichen ringförmigen Einfassung, die axial außerhalb von im Außenbereich des Gehäusedurchmessers angeordneten Barrieren offen ist, und einer ebenfalls ringförmigen Gelenkschale,
- Fig. 3: die Gelenk- oder Lageranordnung nach Figur 2 in eingebauter, in einen Lenker eingepresster Stellung.

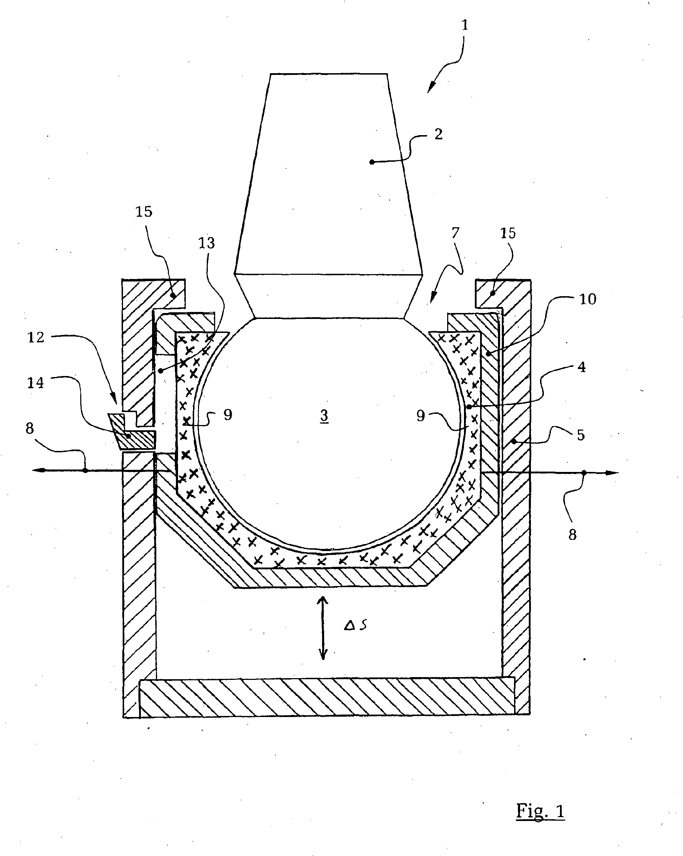

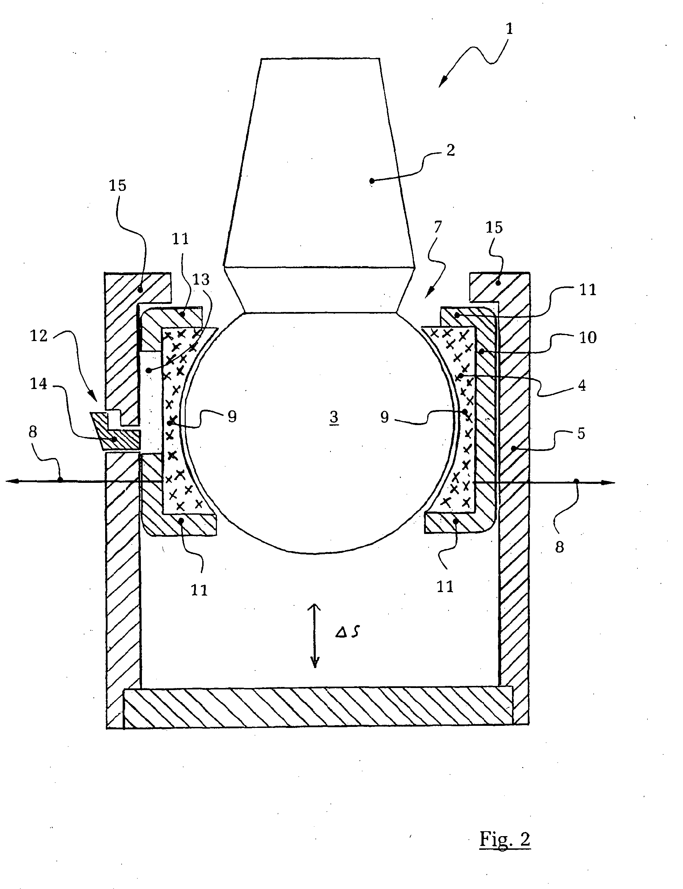

Die Gelenkanordnung 1 nach Figur 1 umfasst einen axial erstreckten Gelenkzapfen 2 mit einem erweiterten und beispielsweise durch eine im Wesentlichen kugelförmige Ausformung gebildeten Kopfbereich 3. Dieser kann in und gegenüber einer in der Regel dauergeschmierten Gelenk- oder Lagerschale 4, die den Kopfbereich aufnimmt, beweglich gehalten sein. Die Gelenkschale 4 nach Figur 1 ist außerhalb des Zapfendurchtritts im Wesentlichen geschlossen, die Gelenkschale 4 nach Figur 2 hingegen eher ringförmig.

Weiterhin ist die Gelenkschale 4 ihrerseits zumindest radial außen teilweise von einem als Gehäuse 5 wirkenden Aufnahmeraum umgeben. Das Gehäuse 5 muss keine gesonderte Baueinheit ausbilden, sondern kann auch integraler Bestandteil eines beispielsweise die Gelenkanordnung 1 im montierten Zustand umgreifenden Lenkers 6 sein.

Ein solcher Lenker 6 kann beispielsweise durch Umspritzen oder -gießen mit flüssigem, heißen Material hergestellt werden, zum Beispiel durch Zinkdruckguss, wobei der Lenker 6 nach anschließendem Erkalten in einer Form starr und formstabil ist und ohne weitere Nachbearbeitung ein integrales Gehäuse 5 bilden kann.

Die Gelenk- und/oder Lageranordnung 1 umfasst weiter eine Dichtungsmanschette, die häufig als Dichtungsbalg ausgebildet und hier nicht eingezeichnet ist. Sie schließt im Bereich der von dem Gehäuse 5 belassenen Durchtrittsöffnung 7 für den Zapfen 2 an die Gelenkschale 4 an.

Im Ausführungsbeispiel ist ein während des Betriebs lediglich radial belastetes Gelenk 1 gezeigt, das allerdings ein axiales Spiel Δs belässt, das zur Montage und Demontage zum Beispiel des Lenkers 6 innerhalb des Fahrwerks benötigt wird. Eine axiale Belastung dieses Gelenkes 1 im laufenden Betrieb ist hier nicht vorgesehen; auch bei Einbettung in einen durch Umspritzen angeformten Lenker 6 bleibt die Gelenkanordnung einzeln auswechselbar.

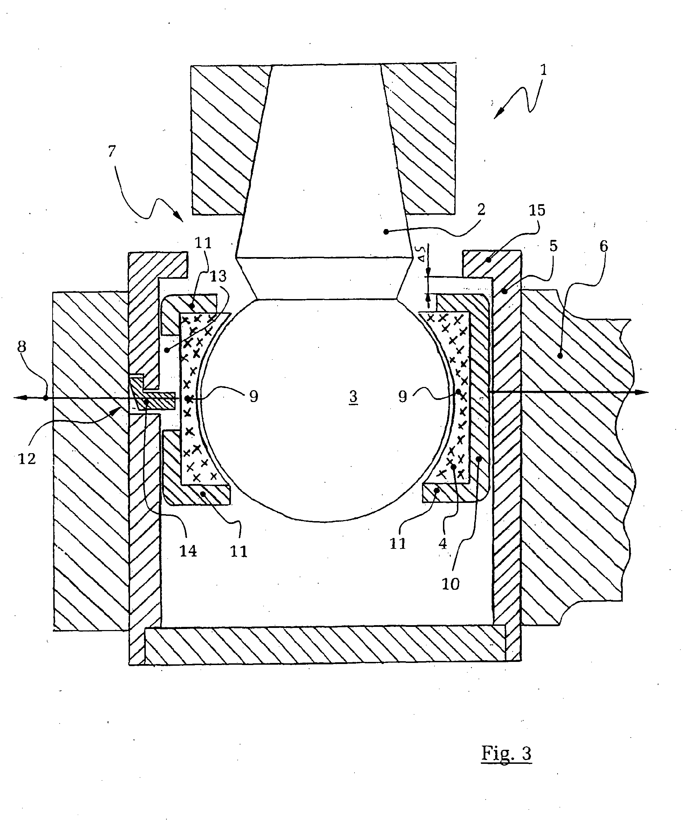

Die Gelenkschale 4, die in der ersten Version nach Figur 1 außerhalb der Durchtrittsöffnung 7 für den Zapfen 2 und außerhalb von Durchbrechungen für die Spreizflügel geschlossen und in der zweiten Version nach den Figuren 2 und 3 nahezu ringförmig ausgebildet ist, kann beispielhaft aus einem PA, POM, PBT, PEEK oder vernetzten Typen dieser Materialien (zum Beispiel durch Elektronenstrahlvernetzen) gebildet sein. Diese gewähren die benötigte Temperaturbeständigkeit und sind dennoch-hinreichend weich und elastisch nachgiebig, um im Betrieb hohen Komfort und Geräuscharmut zu bieten.

Da aufgrund der radialen Belastung im Betrieb radiale Kräfte 8 auf die umfangsseitigen Wandungen 9 der Gelenkschale 4 wirken, so dass diese demgegenüber ausweichend die Tendenz zeigen, in axiale Richtung zu fließen, insbesondere bei hoher Belastung und/oder hohen Temperaturen, ist zwischen der Gelenkschale 4 und dem Gehäuse 5 hier genau eine die Gelenkschale bereichsweise umgreifende Einfassung 10 mit axialen Barrieren 11 angeordnet. Unter axialen Barrieren 11 sind solche Barrieren zu verstehen, die das Material der Gelenkschale 4 gegen axiales Fließen sichern und selbst vom äußeren Rand der Einfassung 10 mit einer Komponente radial einwärts ragen.

Insbesondere bei dem geschlossenen Zwischengehäuse 10 nach Figur 1 können die Barrieren 11 als Gehäusewandung auch eine Schrägerstreckung aufweisen.

Auch mehrere - beispielsweise einander übergreifende Einfassungen 10 - wären grundsätzlich möglich.

Die axialen Barrieren 11 liegen unmittelbar an der Gelenkschale 4 an, so dass diese an den axialen Randkanten ihrer Umfangswandungen 9 fest und spielfrei eingefasst ist. Ein Ausweichen von Material der Gelenkschale 4 in axialer Richtung ist dadurch vollständig verhindert. Der Gehäuserand 15 kann nach Einführen der Gelenkschale 4 und der Einfassung 10 zum Beispiel durch Umbördeln geschlossen werden.

Im Ausführungsbeispiel nach Figur 1 bildet die Einfassung 10 ein außerhalb eines Durchtrittsbereichs 7 für den Gelenkzapfen 2 zumindest im Wesentlichen - außerhalb von Durchbrechungen für die Bildung und Bewegung von Spreizflügeln - geschlossenes Zwischengehäuse aus. Hier ist die Einfassung 10 für einen einfachen Herstellungsprozess einstückig ausgebildet.

Am Durchtrittsbereich 7 des Zapfens 2 ist die dortige gegen axiales Fließen sichernde Barriere 11 hingegen als von der Innenwandung des Gehäuses einwärts ragender umlaufender Rand der Einfassung ausgebildet, der in etwa zumindest 10%, besser 15% - 20%, des Durchmessers der Gelenkschale 4 überdeckt. Damit verbleibt einerseits ein hinreichend großer Durchtrittsbereich 7 auch für eine Schwenkbewegung des Zapfens 2, andererseits sind die Wandungen 9 der Gelenkschale aber möglichst so weit übergriffen, dass auch an den Barrieren 11 vorbei auch bei hoher radialer Belastung 8 praktisch kein Materialfließen der Gelenkschale 4 mehr stattfinden kann. In dem der Durchtrittsöffnung 7 axial gegenüber gelegenen Bereich ist vorzugsweise ein noch größerer Teil des Durchmessers durch die dortigen Barrieren 11 abgedeckt.

Um das Materialfließen oder -kriechen wirkungsvoll zu verhindern, ist die Einfassung 10 zumindest im Bereich der axial wirksamen Barrieren aus Stahl oder einem gegenüber der Gelenkschale 4 härteren Kunststoff, etwa PEEK, gebildet. Eine nachgebende Verformung der Barrieren 11 kann dadurch auch bei hoher Belastung ausgeschlossen werden. Zudem ist eine Faserverstärkung möglich. Die Einfassung 10 kann auch mehrlagig ausgebildet sein und etwa auf der Außenseite einen Gleitlack oder eine Kunststoffbeschichtung zur Verbesserung der tribologischen Eigenschaften aufweisen.

Bei den in der Zeichnung dargestellten Gelenkanordnungen 1 sind zur Montage die mit dem Zapfen 2 bestückten Gelenkschalen 4, montiert in ihrer jeweiligen Einfassung 10, axial verschieblich in das Gehäuse 5 einsetzbar. Zur Erleichterung der Montage ist dabei eine Verdrehsicherung 12 vorgesehen. Diese umfasst hier einen in ein axial erstrecktes Langloch 13 der Gelenkschale 4 eingreifenden Bolzen, Nocken 14 oder ähnliches, wobei die axiale Länge des Langlochs 13 dem Verschiebeweg Δs im Gehäuse 5 mindestens entspricht. Auch andere Verdrehsicherungen sind möglich.

Um die im Betrieb auftretenden axialen und/oder radialen Kräfte abfangen zu können und einen spiel- und klapperfreien Betrieb zu gewährleisten, ist ein noch beweglicher Sitz des Kopfbereichs 3 in der Gelenkschale 4 und ein fester Sitz der Gelenkschale 4 in der axial gegenüber dem Gehäuse 5 verschieblichen Einfassung 10 zu gewährleisten. Durch die Einfassung 10 ist eine Vorspannung in die Gelenkschale 4 eintragbar, die über die Lebensdauer zumindest nahezu konstant bleibt.

Derartige Gelenk- und/oder Lageranordnungen 1 können in erfindungsgemäßer Ausbildung vorteilhaft insbesondere innerhalb von Fahrwerks- und/oder Lenkungsteilen von Kraftfahrzeugen eingesetzt werden, auch zum Beispiel, um bauartbedingte Toleranzen zwischen Lenker und Radträger bei der Montage im Fahrzeug auszugleichen.

### Bezugszeichenliste

- 1: Gelenk- und/oder Lageranordnung
- 2: Zapfen
- 3: Kopfbereich
- 4: Gelenkschale
- 5: Gehäuse
- 6: Lenker
- 7: Durchtrittsöffnung
- 8: radiale Kräfte
- 9: umfangsseitige Wandungen
- 10: Einfassung
- 11: Barrieren
- 12: Verdrehsicherung
- 13: Langloch
- 14: Bolzen, Nocken
- 15: Gehäuserand

## Patentansprüche

1. Gelenk- und/oder Lageranordnung (1) mit einem Gelenkzapfen (2), dessen Kopfbereich (3) gegenüber einer aufnehmenden Gelenkschale (4) beweglich ist. wobei die Gelenkschale (4) in montiertert Stellung in einem als Gehäuse (5) wirkenden Aufnahmeraum angeordnet ist, wobei
zwischen der Gelenkschale (4) und dem Gehäuse (5) zumindest eine die Gelenkschale (4) bereichsweise umgreifende Einfassung (10) mit axialen Barrieren (11) angeordnet ist, **dadurch gekennzeichnet, dass** die Einfassung (10) gegenüber dem Gehäuse (5) axial verschieblich ist.

2. Gelenk- und/oder Lageranordnung [1] nach Anspruch 1.
**dadurch gekennzeichnet,**
**dass** die axialen Barrieren (11) unmittelbar an der Gelenkschale (4) anliegen.

3. Gelenk- und/oder Lageranordnung (1) nach einem der Ansprüche 1 oder 2,
**dadurch gekennzeichnet,**
**dass** die Einfassung (10) ein außerhalb eines Durchtrittsbereichs (7) für den Gelenkzapfen (2) zumindest im Wesentlichen geschlossenes Zwischengehäuse ausbildet.

4. Gelenk- und/oder Lageranordnung (1) nach einem der Ansprüche 1 bis 3.
**dadurch gekennzeichnet,**
**dass** das Gehäuse (5) als Umspritzung (6) der Gelenkschale (4) gebildet ist.

5. Gelenk- und/oder Lageranordnung (1) nach einem der Ansprüche 1 bis 4,
**dadurch gekennzeichnet,**
**dass** am Durchtrittsbereich (7) des Zapfens (2) die axiale Barriere (11) als von der Ionenwandung des Gehäuses (5) einwärts ragender umlaufender Rand der Einfassung (10) ausgebildet ist.

6. Gelenk- und/oder Lageranordnung (1) nach Anspruch 5,
**dadurch gekennzeichnet,**
**dass** die axiale Barriere zumindest 10% des Durchmessers der Gelenkschale (4) überdeckt.

7. Gelenk- und/oder Lageranordnung (1) nach einem der Ansprüche 1 bis 6,
**dadurch gekennzeichnet,**
**dass** die Einfassung (10) einstückig ausgebildet ist.

8. Gelenk- und/oder Lageranordnung (1) nach einem der Ansprüche 1 bis 7,
**dadurch gekennzeichnet,**
**dass** die Einfassung (10) mit einer Verdrehsicherung (12) im Gehäuse (5) gehalten ist.

9. Gelenk- und/oder Lageranordnung (1) nach einem der Ansprüche 1 bis 8,
**dadurch gekennzeichnet,**
**dass** die Einfassung (10) aus Stahl oder einem gegenüber der Gelenkschale (4) härteren Kunststoff gebildet ist.

10. Gelenk- und/oder Lageranordnung (1) nach einem der Ansprüche 1 bis 9,
**dadurch gekennzeichnet,**
**dass** die Gelenkschale (4) im Betrieb vorgespannt ist.

11. Gelenk- und/oder Lageranordnung (1) nach Anspruch 10,
**dadurch gekennzeichnet,**
**dass** diese während des Einbaus im Wesentlichen axial beansprucht und im Betrieb im Wesentlichen radial beansprucht ist.

12. Kraftfahrzeug mit zumindest einer Gelenk- und/oder Lageranordnung (1) nach einem der Ansprüche 1 bis 11, insbesondere innerhalb von Fahrwerks- und/oder Lenkungsteilen.

## Claims

1. Joint and/or bearing arrangement (1) with a joint pin (2), the head region (3) of which is movable in relation to an accommodating joint bowl (4) being arranged, in the mounted position, in a reception space acting as a housing (5), there being arranged between the joint bowl (4) and the housing (5) at least one frame (10) surrounding the joint bowl (4) in regions and having axial barriers (11), **characterized in that** the frame (10) is displaceable axially in relation to the housing (5).

2. Joint and/or bearing arrangement (1) according to Claim 1, **characterized in that** the axial barriers (11) bear directly against the joint bowl (4).

3. Joint and/or bearing arrangement (1) according to either one of Claims 1 and 2, **characterized in that** the frame (10) forms an intermediate housing which is at least essentially closed outside a passage region (7) for the joint pin (2).

4. Joint and/or bearing arrangement (1) according to one of Claims 1 to 3, **characterized in that** the housing (5) is formed as an injection-moulded surround (6) of the joint bowl (4).

5. Joint and/or bearing arrangement (1) according to one of Claims 1 to 4, **characterized in that**, at the passage region (7) of the pin (2), the axial barrier (11) is formed as a peripheral margin of the frame (10), the said margin projecting inwards from the inner wall of the housing (5).

6. Joint and/or bearing arrangement (1) according to Claim 5, **characterized in that** the axial barrier covers at least 10% of the diameter of the joint bowl (4).

7. Joint and/or bearing arrangement (1) according to one of Claims 1 to 6, **characterized in that** the frame (10) is formed in one piece.

8. Joint and/or bearing arrangement (1) according to one of Claims 1 to 7, **characterized in that** the frame (10) is held in the housing (5) by means of an anti-twist device (12).

9. Joint and/or bearing arrangement (1) according to one of Claims 1 to 8, **characterized in that** the frame (10) is formed from steel or from a plastic which is harder, as compared with the joint bowl (4).

10. Joint and/or bearing arrangement (1) according to one of Claims 1 to 9, **characterized in that** the joint bowl (4) is prestressed during operation.

11. Joint and/or bearing arrangement (1) according to Claim 10, **characterized in that** it is stressed essentially axially during installation and is stressed essentially radially during operation.

12. Motor vehicle having at least one joint and/or bearing arrangement (1) according to one of Claims 1 to 11, in particular inside chassis and/or steering parts.

## Revendications

1. Ensemble articulation et/ou palier (1), comprenant un pivot (2) dont la région de tête (3) est mobile par rapport à une cuvette rotule réceptrice (4), la cuvette rotule (4) étant disposée, dans la position montée, dans un espace de réception agissant en tant que boîtier (5), au moins une enveloppe (10) pourvue de barrières axiales (11) et venant en prise dans certaines régions autour de la cuvette rotule (4) étant disposée entre la cuvette rotule (4) et le boîtier (5), **caractérisé en ce que** l'enveloppe (10) est déplaçable axialement par rapport au boîtier (5).

2. Ensemble articulation et/ou palier (1) selon la revendication 1,
**caractérisé en ce que**
les barrières axiales (11) s'appliquent directement contre la cuvette rotule (4).

3. Ensemble articulation et/ou palier (1) selon la revendication 1 ou 2,
**caractérisé en ce que**
l'enveloppe (10) forme un boîtier intermédiaire au moins essentiellement fermé à l'extérieur d'une région de passage (7) pour le pivot (2).

4. Ensemble articulation et/ou palier (1) selon l'une quelconque des revendications 1 à 3,
**caractérisé en ce que**
le boîtier (5) est réalisé sous forme de surmoulage (6) de la cuvette rotule (4).

5. Ensemble articulation et/ou palier (1) selon l'une quelconque des revendications 1 à 4,
**caractérisé en ce**
**qu'**au niveau de la région de passage (7) du pivot (2), la barrière axiale (11) est réalisée sous forme de bord périphérique de l'enveloppe (10) faisant saillie vers l'intérieur à partir de la paroi intérieure du boîtier (5).

6. Ensemble articulation et/ou palier (1) selon la revendication 5,
**caractérisé en ce que**
la barrière axiale recouvre au moins 10 % du diamètre de la cuvette rotule (4).

7. Ensemble articulation et/ou palier (1) selon l'une quelconque des revendications 1 à 6,
**caractérisé en ce que**
l'enveloppe (10) est réalisée d'une seule pièce.

8. Ensemble articulation et/ou palier (1) selon l'une quelconque des revendications 1 à 7,
**caractérisé en ce que**
l'enveloppe (10) est retenue dans le boîtier (5) à l'aide d'une fixation anti-rotation (12).

9. Ensemble articulation et/ou palier (1) selon l'une quelconque des revendications 1 à 8,
**caractérisé en ce que**
l'enveloppe (10) est formée à partir d'acier ou d'un plastique plus dur que la cuvette rotule (4).

10. Ensemble articulation et/ou palier (1) selon l'une quelconque des revendications 1 à 9,
**caractérisé en ce que**
la cuvette rotule (4) est précontrainte lors du fonctionnement.

11. Ensemble articulation et/ou palier (1) selon la revendication 10,
**caractérisé en ce que**
celui-ci est, pendant l'installation, sollicité essentiellement axialement et, pendant le fonctionnement, sollicité essentiellement radialement.

12. Véhicule automobile comprenant au moins un ensemble articulation et/ou palier (1) selon l'une quelconque des revendications 1 à 11, en particulier à l'intérieur de pièces de châssis et/ou de direction.
